# EUROPEAN PATENT APPLICATION

(11) **EP 4 701 057 A1**
(43) Date of publication of application: **25.02.2026**
(21) Application number: 25197026.5
(22) Date of filing: 20.08.2025
(51) Int. Cl.: H02M 1/00, H02M 3/00, H02M 3/335

(54) **RESONANT CONVERTER AND CONTROL METHOD THEREOF**

(30) Priority: 21.08.2024 US 202463685372 P
(71) Applicant: Delta Electronics, Inc., Neihu, Taipei 11491 (TW)
(72) Inventor: Wang, Dakai, Morrisville, NC 27560 (US); Peng, Te-Chih, 11491 Taipei (TW); Kumar, Misha, Morrisville, NC 27560 (US); Barbosa, Peter Mantovanelli, Morrisville, NC 27560 (US)
(74) Representative: Uexküll & Stolberg

(57) **Abstract**

A resonant converter (1) and a control method thereof are provided. The resonant converter (1) includes primary and secondary circuits (2, 3) and a transformer. The control method includes: in first control mode, controlling primary switches (Q₁, Q₂, Q₃, Q₄) of the primary circuit (2) and secondary switches (S₁, S₂, S₃, S₄) of the secondary circuit (3) with a variable switching frequency; in second control mode, controlling a phase shift between the primary switches (Q₁, Q₂, Q₃, Q₄) and the secondary switches (S₁, S₂, S₃, S₄); when an input voltage (Vᵢₙ) is within a preset range, controlling the resonant converter (1) with the first control mode; when the input voltage (Vᵢₙ) changes from within the preset range to outside the preset range, transiting from the first control mode to the second control mode to maintain an output voltage (Vₒ) within a predetermined range; and when the input voltage (Vᵢₙ) changes from outside the preset range to within the preset range, transiting from the second control mode to the first control mode.

## Description

### FIELD OF THE INVENTION

The present disclosure relates to a resonant converter and a control method thereof, and more particularly to a resonant converter and a transition control method thereof.

### BACKGROUND OF THE INVENTION

Resonant converters such as SRC (series resonant converter) and LLC are widely used in datacenter applications because of zero-voltage-switching (ZVS) from light load to full-load, high efficiency, and high power density. Variable frequency control is normally adopted.

In some application scenarios (e.g., open computer project 3, OCP3), output voltage range becomes much narrower, and the DC-DC converter is designed to maximize the efficiency at normal operation. As a result, the ratio of magnetizing inductance to resonant inductance may be higher than previous design. However, the gain may be not enough to meet the hold-up time requirement. Instead, lead-time control may be used during the hold-up time because it offers (1) higher gain compared to the variable frequency control; (2) a smooth transition between the variable frequency control and the lead-time control. Nevertheless, the secondary switches are hard-switching, and the resonant capacitor voltage increases a lot compared to normal operation. These are not severe problems in conventional PSU (power supply unit) due to low power (1.5~3kW).

However, with the fast development of information technology, especially cloud computing, big data, and artificial intelligence, the power consumption of data centers is increasing significantly. The power level of each power supply unit needs to be increased a lot without increasing the footprint. The conventional lead-time control becomes more challenging in this condition.

Delay-time control is also widely used in resonant converters because of the ZVS for switches at secondary side, lower resonant capacitor voltage, and low peak and RMS current. However, it's not used in hold-up time because the switching frequency of delay-time control is above resonant frequency while the switching frequency of variable frequency control is normally below resonant frequency when the input voltage drops to a lower value.

Therefore, there is a need of providing a resonant converter and a control method thereof in order to overcome the drawbacks of the conventional technologies.

### SUMMARY OF THE INVENTION

The present disclosure provides a resonant converter and a control method thereof in which delay-time control is applied during the hold-up time by controlling the switches at the primary side. Accordingly, the ZVS of the switches at the secondary side is achieved, and the resonant capacitor voltage and current are reduced.

In accordance with an aspect of the present disclosure, a control method of a resonant converter is provided. The resonant converter includes a primary circuit, a transformer and a secondary circuit. The transformer is coupled between the primary circuit and the secondary circuit. The control method includes: in a first control mode, controlling primary switches of the primary circuit and secondary switches of the secondary circuit with a variable switching frequency; in a second control mode, controlling a phase shift between the primary switches and the secondary switches; when an input voltage of the resonant converter is within a preset range, controlling the resonant converter with the first control mode; when the input voltage changes from within the preset range to outside the preset range, transiting from the first control mode to the second control mode to maintain an output voltage of the resonant converter within a predetermined range; and when the input voltage changes from outside the preset range to within the preset range, transiting from the second control mode to the first control mode.

In accordance with another aspect of the present disclosure, a resonant converter is provided. The resonant converter includes a primary circuit, a secondary circuit, a transformer and a control module. The primary circuit includes primary switches. The secondary circuit includes secondary switches. The transformer is coupled between the primary circuit and the secondary circuit. The control module is configured to: in a first control mode, control primary switches of the primary circuit and secondary switches of the secondary circuit with a variable switching frequency; in a second control mode, control a phase shift between the primary switches and the secondary switches; when an input voltage of the resonant converter is within a preset range, control the resonant converter with the first control mode; when the input voltage changes from within the preset range to outside the preset range, transit from the first control mode to the second control mode to maintain an output voltage of the resonant converter within a predetermined range; and when the input voltage changes from outside the preset range to within the preset range, transit from the second control mode to the first control mode.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1A is a schematic circuit diagram illustrating a resonant converter according to an embodiment of the present disclosure;
FIG. 1B schematically shows a variant of the resonant converter of FIG. 1A;
FIG. 2 schematically shows waveforms of the magnetizing currents of applying primary lead-time control and secondary delay-time control during the transition with sudden change of switching frequency and phase-shift between the primary and secondary switches;
FIG. 3A and FIG. 3B schematically show operation waveforms and trajectory of a direct transition from the first control mode to the second control mode applying the DT-DT (delay time-delay time) control;
FIG. 4A and FIG. 4B schematically show operation waveforms and trajectory of a seamless transition from the first control mode to the second control mode applying the DT-DT control;
FIGS. 4C, 4D, 4E, 4F, 4G, and 4H show equivalent circuits of the resonant converter of FIG. 1A during different time periods shown in FIG. 4A;
FIG. 5A and FIG. 5B schematically show operation waveforms and trajectory of a delay transition from the first control mode to the second control mode applying the DT-DT control;
FIG. 6 schematically shows the whole hold-up time process with the transition from the first control mode to the second control mode applying the DT-DT control;
FIG. 7A and FIG. 7B schematically show operation waveforms and trajectory of a direct transition from the first control mode to the second control mode applying the SR-DT (synchronous rectification-delay time) control;
FIG. 8 schematically shows the whole hold-up time process with the transition from the first control mode to the second control mode applying the SR-DT control;
FIG. 9 schematically show operation waveforms of a direct transition from the second control mode applying the DT-DT control to the first control mode;
FIG. 10A and FIG. 10B schematically show operation waveforms and trajectory of a transition from the second control mode applying the DT-DT control to the first control mode with a phase shift;
FIG. 10C and FIG. 10D show equivalent circuits of the resonant converter of FIG. 1A during different time periods shown in FIG. 10A;
FIG. 11A and FIG. 11B schematically show operation waveforms and trajectory of a transition from the second control mode applying the DT-DT control to the first control mode with first period feedforward;
FIG. 12A and FIG. 12B schematically show operation waveforms and trajectory of a direct transition from the second control mode applying the SR-DT control to the first control mode;
FIG. 13A and FIG. 13B schematically show operation waveforms and trajectory of a transition from the second control mode applying the SR-DT control to the first control mode with a phase shift;
FIG. 14A and FIG. 14B schematically show operation waveforms and trajectory of a transition from the second control mode applying the SR-DT control to the first control mode with first period feedforward;
FIG. 15 schematically shows the whole hold-up time process with the transition between the first control mode and the second control mode applying the DT-DT control; and
FIG. 16 schematically shows the whole hold-up time process with the transition between the first control mode and the second control mode applying the SR-DT control.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

As mentioned above, the switching frequency of the delay-time control is above resonant frequency, while the switching frequency of the variable frequency control is normally below resonant frequency when the input voltage drops to a lower value. In order to utilize the delay-time control in hold-up time, the present disclosure provides a control method for realizing a smooth transition between the variable frequency control and the delay-time control. At the same time, the transformer is prevented from saturation during transition.

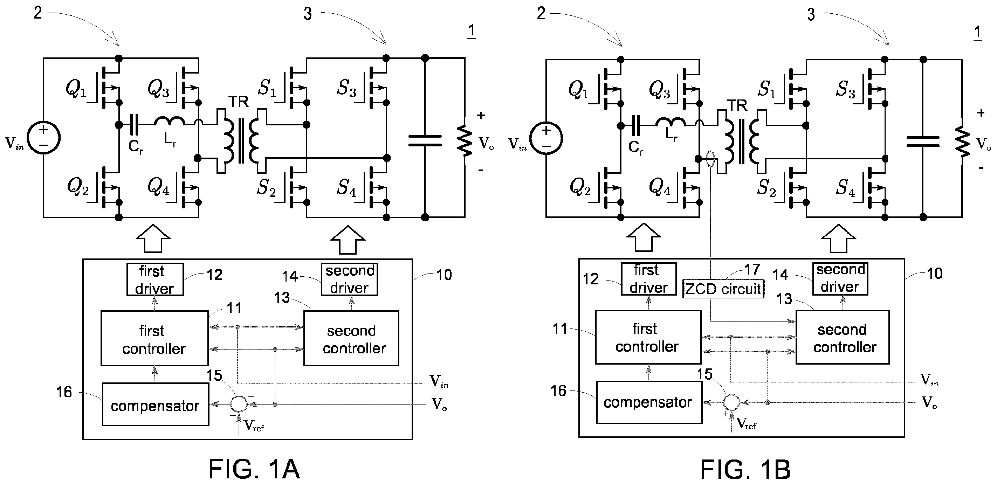

Please refer to FIG. 1A. FIG. 1A is a schematic circuit diagram illustrating a resonant converter according to an embodiment of the present disclosure. As shown in FIG. 1A, the resonant converter 1 includes a primary circuit 2, a transformer TR, a secondary circuit 3, and a control module 10, and the transformer TR is coupled between the primary circuit 2 and the secondary circuit 3. The primary circuit 2 receives an input voltage Vᵢₙ and includes primary switches Q₁, Q₂, Q₃ and Q₄. The primary switches Q₁ and Q₂ are electrically connected in series to form a first switch bridge arm, the primary switches Q₃ and Q₄ are electrically connected in series to form a second switch bridge arm, and the first and second switch bridge arms are electrically connected in parallel. Moreover, the primary circuit 2 further includes a resonant tank between a connection node of the primary switches Q₁ and Q₂ and a first terminal of a primary winding of the transformer TR. In this embodiment, the resonant tank includes a resonant capacitor Cᵣ and a resonant inductor Lᵣ electrically connected in series. Additionally, a second terminal of the primary winding of the transformer TR is coupled to a connection node of the primary switches Q₃ and Q₄. The secondary circuit 3 includes secondary switches S₁, S₂, S₃ and S₄ and provides an output voltage Vₒ. The secondary switches S₁ and S₂ are electrically connected in series to form a third switch bridge arm, the secondary switches S₃ and S₄ are electrically connected in series to form a fourth switch bridge arm, and the third and fourth switch bridge arms are electrically connected in parallel. Further, two terminals of a secondary winding of the transformer TR are electrically connected to a connection node of the secondary switches S₁ and S₂ and a connection node of the secondary switches S₃ and S₄, respectively. In an embodiment, the secondary circuit 3 further includes an output capacitor electrically connected in parallel to the third and fourth switch bridge arms.

In addition, the primary circuit 2 and the secondary circuit 3 adopt full-bridge configurations in this embodiment, but not limited thereto. In another embodiment, the primary circuit 2 and/or the secondary circuit 3 may include half-bridge configurations. In further another embodiment, the secondary circuit 3 may include a center-tapped configuration.

In an embodiment, the control module 10 is configured to control the operation of the resonant converter 1 through controlling the primary switches Q₁, Q₂, Q₃ and Q₄ and the secondary switches S₁, S₂, S₃ and S₄. It is noted that the driving signals of the primary or secondary switches in the same switch bridge arm may be complementary to each other with reasonable deadtime. In the embodiment, the driving signals of the primary switches in the same switch bridge arm are complementary to each other with a first reasonable deadtime, and the driving signals of the secondary switches in the same switch bridge arm are complementary to each other with a second reasonable deadtime. The control module 10 operates in a first control mode or a second control mode according to the input voltage Vᵢₙ. Specifically, when the input voltage Vᵢₙ is within a preset range, which means that the input voltage Vᵢₙ is normal and the resonant converter 1 operates normally, the control module 10 operates in the first control mode. For example, when the input voltage Vᵢₙ is a DC voltage, the input voltage Vᵢₙ is within the preset range if the input voltage Vᵢₙ is higher than a threshold voltage. In the first control mode, the control module 10 controls the primary switches Q₁, Q₂, Q₃ and Q₄ and the secondary switches S₁, S₂, S₃ and S₄ with the same switching frequency, and the switching frequency may be fixed or variable. In the first control mode, the secondary switches S₁, S₂, S₃ and S₄ may operate as synchronous rectification switches or maintain at an off state. When the input voltage Vᵢₙ changes from within the preset range to outside the preset range, which means that the power source providing input voltage Vᵢₙ may fail or be temporarily interrupted, the control module 10 transits from the first control mode to the second control mode to maintain the output voltage Vₒ of the resonant converter 1 within a predetermined range. This duration of maintaining the output voltage Vₒ within the predetermined range is also known as hold-up time. For example, when the input voltage Vᵢₙ is the DC voltage, the input voltage Vᵢₙ changes from within the preset range to outside the preset range if the input voltage Vᵢₙ drops below the threshold voltage. In the second control mode, the primary switches Q₁, Q₂, Q₃ and Q₄ are operated to control a lead time of the primary switches Q₁, Q₂, Q₃ and Q₄ leading the secondary switches S₁, S₂, S₃ and S₄. Further, in the second control mode, a DT-DT (delay time-delay time) control or an SR-DT (synchronous rectification-delay time) control may be applied. Under the DT-DT control, the phases of the secondary switches S₁, S₂, S₃ and S₄ are fixed, and the driving signals of the secondary switches S₁, S₂, S₃ and S₄ are delayed by the said lead time relative to the driving signals of the primary switches Q₁, Q₂, Q₃ and Q₄. Under the SR-DT control, two secondary switches S₁ and S₂ operate as synchronous rectification switches, the other two secondary switches S₃ and S₄ have fixed phases and the driving signals delayed by the said lead time relative to the driving signals of the primary switches Q₁, Q₂, Q₃ and Q₄. Moreover, the DT-DT control may be applied in full-bridge configuration or half-bridge configuration, while the SR-DT control may be applied in the full-bridge configuration. In addition, when the input voltage Vᵢₙ changes from outside the preset range to within the preset range, which means that the power source providing input voltage Vᵢₙ may recover, the control module 10 transits from the second control mode to the first control mode.

Consequently, the resonant inductor Lᵣ is at primary side and the transformer TR directly sees the volt-second generated by the secondary side, and the phases of the secondary switches S₁, S₂, S₃ and S₄ are fixed. Therefore, the voltage-second of the transformer TR would be almost fixed and symmetrical, and the delay-time or lead-time control at the primary side do not have big effect on the voltage-second of the transformer TR. Thereby, the transient magnetizing current of the transformer TR is reduced, and also the transformer TR can be prevented from saturation.

In addition, in an embodiment, as shown in FIG. 1A, the control module 10 includes a first controller 11, a first driver 12, a second controller 13 and a second driver 14. The first controller 11 is configured to generate primary control signals according to the input voltage Vᵢₙ and the output voltage Vₒ, and the first driver 12 is configured to provide primary driving signals for the primary switches Q₁, Q₂, Q₃ and Q₄ according to the primary control signals generated by the first controller 11. Similarly, the second controller 13 is configured to generate secondary control signals according to the input voltage Vᵢₙ and the output voltage Vₒ, and the second driver 14 is configured to provide secondary driving signals for the secondary switches S₁, S₂, S₃ and S₄ according to the secondary control signals generated by the second controller 13. In an embodiment, the control module 10 further includes a calculator 15 and a compensator 16. The calculator 15 is configured to calculate a difference between the output voltage Vₒ and an output reference voltage V_{ref}, and the compensator 16 is configured to generate a compensation signal according to the difference calculated by the calculator 15. The first controller 11 receives the compensation signal from the compensator 16 and takes the compensation signal into consideration while generating the primary control signals.

In an embodiment, as shown in FIG. 1B, the control module 10 includes a zero-crossing detection (ZCD) circuit 17, which is utilized to detect zero-crossing points of the current flowing through the primary winding of the transformer TR. In an embodiment, applying the DT-DT control or the SR-DT control in the second control mode depends on whether the control module 10 has the function of zero-crossing detection. In particular, if the control module 10 doesn't have the function of zero-crossing detection (e.g., FIG. 1A), the DT-DT control is applied in the second control mode. Alternatively, if the control module 10 has the function of zero-crossing detection (e.g., the control module 10 includes the zero-crossing detection circuit 17 as shown in FIG. 1B), the SR-DT control is applied in the second control mode.

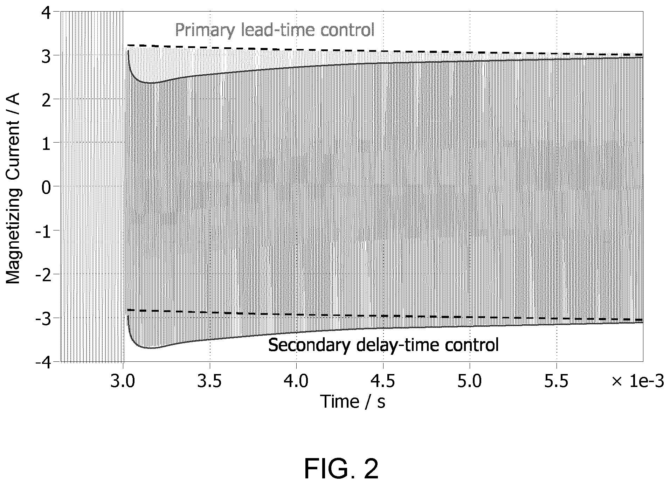

FIG. 2 schematically shows waveforms of the magnetizing currents of applying primary lead-time control and secondary delay-time control during the transition with sudden change of switching frequency and phase-shift between the primary and secondary switches. The primary lead-time control means that the primary switches are operated to control the lead time of the primary switches relative to the secondary switches, and the secondary delay-time control means that the secondary switches are operated to control the delay time of the secondary switches relative to the primary switches. In FIG. 2, the variation trend of peak and valley values of the magnetizing current under the primary lead-time control is depicted by dashed lines, and the variation trend of the peak and valley values of the magnetizing current under the secondary delay-time control is depicted by solid lines. According to FIG. 2, it can be observed that the primary lead-time control has better performance compared to the secondary delay-time control. Therefore, although the phase-shift between the primary and secondary switches under the primary lead-time control is the same as that under the secondary delay-time control, the primary lead-time control is mainly adopted in the methods of the present disclosure to achieve better performance. It is noted that the transition method between different control manners described later in the present disclosure is also applicable to the application adopting the secondary delay-time control.

Various scenarios of transition between the first control mode and the second control mode would be described in detail as follows.

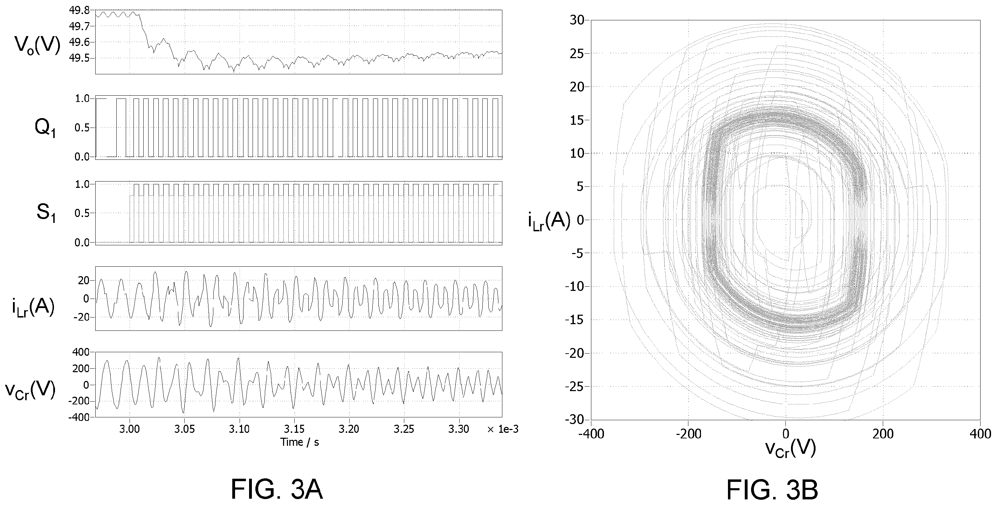

FIG. 3A and FIG. 3B schematically show operation waveforms and trajectory of a direct transition from the first control mode to the second control mode applying the DT-DT control. In FIG. 3A and FIG. 3B, Q₁ represents the primary driving signal of the primary switch Q₁, S₁ represents the secondary driving signal of the secondary switch S₁, i_{Lr} is a resonant inductor current flowing through the resonant inductor Lᵣ, and v_{Cr} is a resonant capacitor voltage of the resonant capacitor Cᵣ. As shown in FIG. 3A and FIG. 3B, during the direct transition, the switching frequency directly goes from low frequency in the first control mode to above the resonant frequency in the DT-DT control of the second control mode. The resonant inductor current i_{Lr} and the resonant capacitor voltage v_{Cr} have some oscillation. In this embodiment, the resonant tank requires careful design to prevent the saturation of resonant inductor Lᵣ and the over-voltage of resonant capacitor Cᵣ.

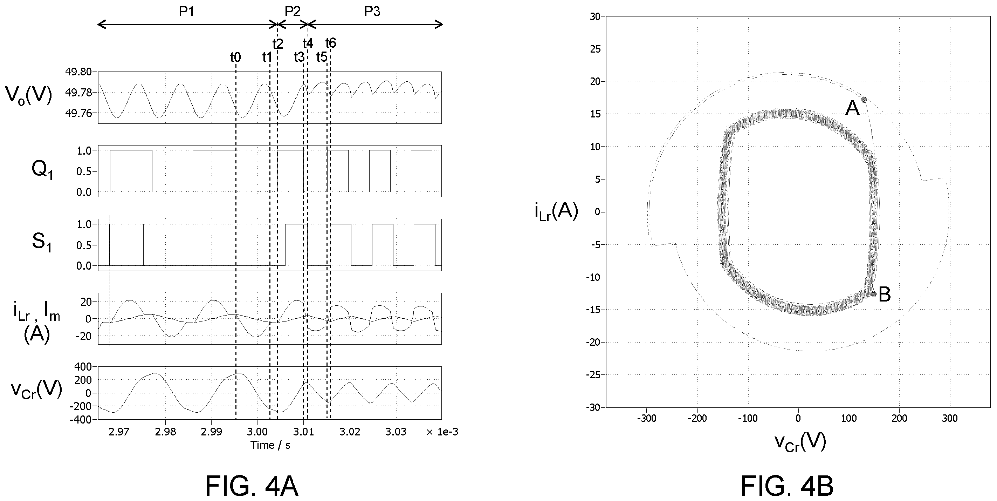

FIG. 4A and FIG. 4B schematically show an embodiment's operation waveforms and trajectory of a seamless transition from the first control mode to the second control mode applying the DT-DT control. In FIG. 4A, Iₘ is a magnetizing current flowing through a magnetizing inductor Lₘ, and the resonant inductor current i_{Lr} and the magnetizing current Iₘ are shown in the same oscillogram in which the amplitude of resonant inductor current i_{Lr} is greater than that of magnetizing current Iₘ. Further, during period P1 (i.e., before time t2), the control module 10 operates in the first control mode; during period P2 (i.e., between time t2 and t4), the control module 10 transits from the first control mode to the second control mode, and during period P3 (i.e., after time t4), the control module 10 operates in the second control mode. In FIG. 4B, the outer trajectory is the trajectory under the first control mode, and the inner trajectory is the trajectory under the DT-DT control of the second control mode with the same gain. As shown in FIG. 4A and FIG. 4B, as the transition from the first control mode to the second control mode is requested (i.e., during the period P2), the primary switch Q₁ is turned off when the resonant capacitor voltage v_{Cr} reaches a target resonant voltage under the DT-DT control (corresponding to point A in FIG. 4B). Then, the secondary switch S₁ turns off when the resonant inductor current i_{Lr} reaches a target resonant current under the DT-DT control (corresponding to point B in FIG. 4B). The time duration between the turn-off time of primary switch Q₁ and the turn-off time of secondary switch S₁ is an initial delay time for the DT-DT control. The resonant capacitor voltage v_{Cr} and the resonant inductor current i_{Lr} may be sensed by voltage and current sensors or may be estimated according to the look-up table based on the input voltage Vᵢₙ and output voltage Vₒ and load conditions. In addition, the target resonant voltage and the target resonant current may be determined according load conditions.

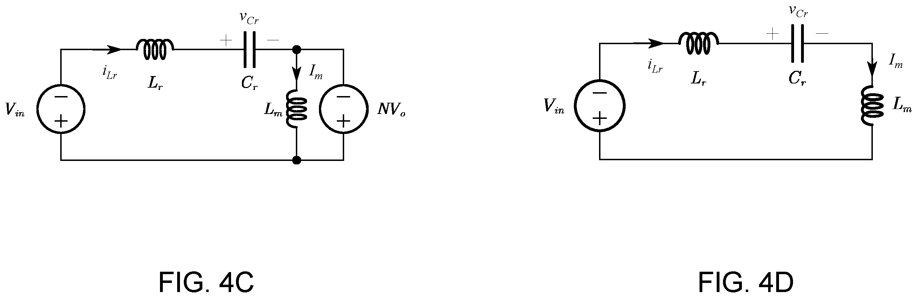

In one embodiment, the equivalent circuit of the resonant converter 1 during the period from time t0 to t1 is shown in FIG. 4C. During this period, the equivalent output voltage at primary side is NVₒ, where N is the primary to secondary turns ratio of the transformer TR. Further, the resonant capacitor voltage v_{Cr}, the resonant inductor current i_{Lr}, and the magnetizing current Iₘ are described as:$\begin{matrix}{ν}_{cr} \left(t\right) = \left(-{V}_{in}+N⋅{V}_{0}\right) + \left({ν}_{cro}+\left({V}_{in}-N⋅{V}_{0}\right)\right) ⋅ cos \left({ω}_{r}t\right) + \\ {t}_{Lr 0} ⋅ Z ⋅ sin \left({ω}_{r}t\right)\end{matrix}$${i}_{Lr} \left(t\right) = {i}_{Lr 0} cos \left({ω}_{r}t\right) - \frac{{v}_{Cr 0} + \left({V}_{in}-N⋅{V}_{o}\right)}{Z} sin \left({ω}_{r}t\right)$ ${I}_{m} \left(t\right) = {i}_{Lr 0} - \frac{N ⋅ {V}_{o}}{{L}_{m}} t$

In equations (1)-(3), v_{Cr0} is the initial voltage of the resonant capacitor voltage v_{Cr} at time t0, i_{Lr0} is the initial current of the resonant inductor current i_{Lr} at time t0, Z equals $\sqrt{{L}_{r} / {C}_{r}}$ and is the characteristic impedance of the resonant inductor Lᵣ and resonant capacitor Cᵣ in the resonant tank, and *ω* equals $1 / \sqrt{{L}_{r} {C}_{r}}$ and is the angular frequency of the resonant inductor Lᵣ and resonant capacitor Cᵣ.

The secondary current Is can be derived as: ${I}_{S} \left(t\right) = N \left({i}_{Lr}\left(t\right)-{I}_{m}\left(t\right)\right)$

The resonant capacitor voltage v_{Cr}, the resonant inductor current i_{Lr}, and the magnetizing current Iₘ at time t1 are defined as v_{Cr1}, i_{Lr1}, and Iₘ₁ respectively. ${v}_{Cr 1} = {v}_{Cr} \left(t1\right) , {i}_{Lr 1} = {i}_{Lr} \left(t1\right) , {I}_{m 1} = {I}_{m} \left(t1\right)$

The equivalent circuit of the resonant converter 1 during the period from time t1 to t2 is shown in FIG. 4D. During this period, the resonant capacitor voltage v_{Cr}, the resonant inductor current i_{Lr}, and the magnetizing current Iₘ are described as: $\begin{matrix}{v}_{Cr} \left(t\right) = - {V}_{in} + \left({v}_{Cr 1}+{V}_{in}\right) ⋅ cos \left({ω}_{r}\left(t-t1\right)\right) + \\ {i}_{Lr 1} ⋅ Z ⋅ sin \left({ω}_{r}\left(t-t1\right)\right)\end{matrix}$ ${I}_{m} \left(t\right) = {i}_{Lr} \left(t\right) = {i}_{Lr 1} cos \left({ω}_{r}\left(t-t1\right)\right) - \frac{{v}_{Cr 1} + {V}_{in}}{Z} sin \left({ω}_{r}\left(t-t1\right)\right)$

The resonant capacitor voltage v_{Cr}, the resonant inductor current i_{Lr}, and the magnetizing current Iₘ at time t2 are defined as v_{Cr2}, i_{Lr2}, and Iₘ₂ respectively. ${v}_{Cr 2} = {v}_{Cr} \left(t2\right) , {i}_{Lr 2} = {i}_{Lr} \left(t2\right) , {I}_{m 2} = {I}_{m} \left(t2\right)$

During the period from time t0 to t2, the average output current Iₒ at secondary side is derived as: ${I}_{o} = \frac{2}{{T}_{S}} {\int }_{t 0}^{t 1} {I}_{S} \left(t\right) dt$

In equation (9), Ts is the switching period.

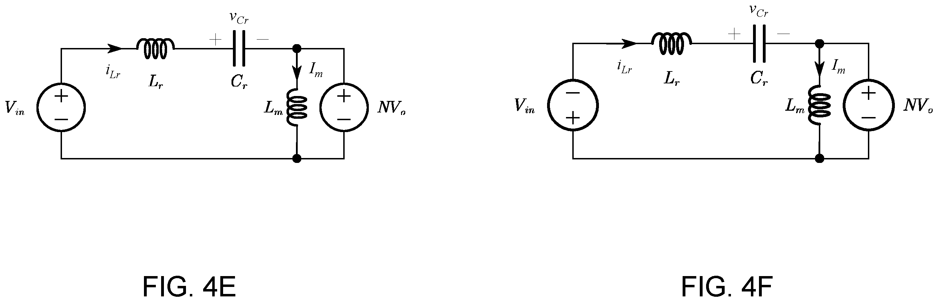

The equivalent circuit of the resonant converter 1 during the period from time t2 to t3 is shown in FIG. 4E. During this period, the resonant capacitor voltage v_{Cr}, the resonant inductor current i_{Lr}, and the magnetizing current Iₘ are described as:$\begin{matrix}{ν}_{Cr} \left(t\right) = \left({V}_{in}-N⋅{V}_{0}\right) + \left({ν}_{Cr 2}-\left({V}_{in}-N⋅{V}_{0}\right)\right) ⋅ cos \left({ω}_{r}\left(t-t2\right)\right) + \\ {i}_{Lr 2} ⋅ Z ⋅ sin \left({ω}_{r}\left(t-t2\right)\right)\end{matrix}$${i}_{Lr} \left(t\right) = {i}_{Lr 2} cos \left({ω}_{r}\left(t-t2\right)\right) - \frac{{v}_{Cr 2} - \left({V}_{in}-N⋅{V}_{o}\right)}{Z} sin \left({ω}_{r}\left(t-t2\right)\right)$ ${I}_{m} \left(t\right) = {I}_{m 2} + \frac{N ⋅ {V}_{o}}{{L}_{m}} t$

The resonant capacitor voltage v_{Cr}, the resonant inductor current i_{Lr}, and the magnetizing current Iₘ at time t3 are defined as v_{Cr3}, i_{Lr3}, and Iₘ₃ respectively. ${v}_{Cr 3} = {v}_{Cr} \left(t3\right) , {i}_{Lr 3} = {i}_{Lr} \left(t3\right) , {I}_{m 3} = {I}_{m} \left(t3\right)$

The equivalent circuit of the resonant converter 1 during the period from time t3 to t4 is shown in FIG. 4F. During this period, the resonant capacitor voltage v_{Cr}, the resonant inductor current i_{Lr}, and the magnetizing current Iₘ are described as:$\begin{matrix}{ν}_{Cr} \left(t\right) = \left(-{V}_{in}-N⋅{V}_{0}\right) + \left({ν}_{Cr 3}+\left({V}_{in}+N⋅{V}_{0}\right)\right) ⋅ cos \left({ω}_{r}\left(t-t3\right)\right) + \\ {i}_{Lr 3} ⋅ Z ⋅ sin \left({ω}_{r}\left(t-t3\right)\right)\end{matrix}$${i}_{Lr} \left(t\right) = {i}_{Lr 3} cos \left({ω}_{r}\left(t-t3\right)\right) - \frac{{v}_{Cr 3} + \left({V}_{in}+N⋅{V}_{o}\right)}{Z} sin \left({ω}_{r}\left(t-t3\right)\right)$ ${I}_{m} \left(t\right) = {I}_{m 3} + \frac{N ⋅ {V}_{o}}{{L}_{m}} t$

The resonant capacitor voltage v_{Cr}, the resonant inductor current i_{Lr}, and the magnetizing current Iₘ at time t4 are defined as v_{Cr4}, i_{Lr4}, and Iₘ₄ respectively. ${v}_{Cr 4} = {v}_{Cr} \left(t4\right) , {i}_{Lr 4} = {i}_{Lr} \left(t4\right) , {I}_{m 4} = {I}_{m} \left(t4\right)$

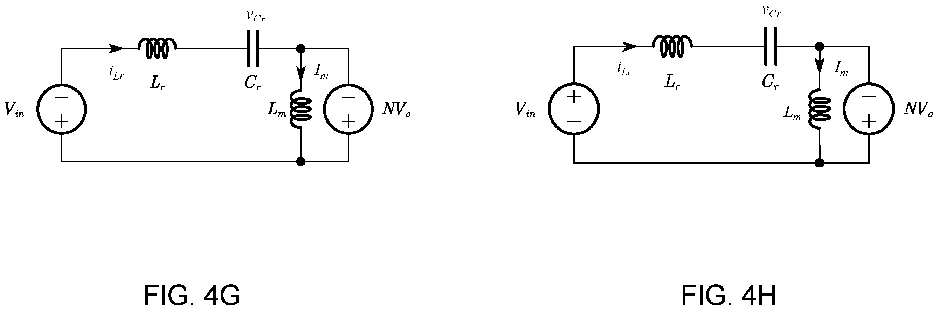

The equivalent circuit of the resonant converter 1 during the period from time t4 to t5 is shown in FIG. 4G. During this period, the resonant capacitor voltage v_{Cr}, the resonant inductor current i_{Lr}, and the magnetizing current Iₘ are described as:$\begin{matrix}{ν}_{Cr} \left(t\right) = \left(-{V}_{in}+N⋅{V}_{0}\right) + \left({ν}_{Cr 4}+\left({V}_{in}-N⋅{V}_{0}\right)\right) ⋅ cos \left({ω}_{r}\left(t-t4\right)\right) + \\ {i}_{Lr 4} ⋅ Z ⋅ sin \left({ω}_{r}\left(t-t4\right)\right)\end{matrix}$${i}_{Lr} \left(t\right) = {i}_{Lr 4} cos \left({ω}_{r}\left(t-t4\right)\right) - \frac{{v}_{Cr 4} + \left({V}_{in}-N⋅{V}_{o}\right)}{Z} sin \left({ω}_{r}\left(t-t4\right)\right)$ ${I}_{m} \left(t\right) = {I}_{m 4} - \frac{N ⋅ {V}_{o}}{{L}_{m}} t$

The resonant capacitor voltage v_{Cr}, the resonant inductor current i_{Lr}, and the magnetizing current Iₘ at time t5 are defined as vers, i_{Lr5}, and Iₘ₅ respectively. ${v}_{Cr 5} = {v}_{Cr} \left(t5\right) , {i}_{Lr 5} = {i}_{Lr} \left(t5\right) , {I}_{m 5} = {I}_{m} \left(t5\right)$

The equivalent circuit of the resonant converter 1 during the period from time t5 to t6 is shown in FIG. 4H. During this period, the resonant capacitor voltage v_{Cr}, the resonant inductor current i_{Lr}, and the magnetizing current Iₘ are described as:$\begin{matrix}{ν}_{Cr} \left(t\right) = \left({V}_{in}+N⋅{V}_{0}\right) + \left({ν}_{Cr 5}-\left({V}_{in}+N⋅{V}_{0}\right)\right) ⋅ cos \left({ω}_{r}\left(t-t5\right)\right) + \\ {i}_{Lr 5} ⋅ Z ⋅ sin \left({ω}_{r}\left(t-t5\right)\right)\end{matrix}$${i}_{Lr} \left(t\right) = {i}_{Lr 5} cos \left({ω}_{r}\left(t-t5\right)\right) - \frac{{v}_{Cr 5} - \left({V}_{in}+N⋅{V}_{o}\right)}{Z} sin \left({ω}_{r}\left(t-t5\right)\right)$ ${I}_{m} \left(t\right) = {I}_{m 5} - \frac{N ⋅ {V}_{o}}{{L}_{m}} t$

The resonant capacitor voltage v_{Cr}, the resonant inductor current i_{Lr}, and the magnetizing current Iₘ at time t6 are defined as v_{Cr6}, i_{Lr6}, and Iₘ₆ respectively. ${v}_{Cr 6} = {v}_{Cr} \left(t6\right) , {i}_{Lr 6} = {i}_{Lr} \left(t6\right) , {I}_{m 6} = {I}_{m} \left(t6\right)$

During the period from time t4 to t6, the average output current Iₒ at secondary side is derived as: ${I}_{o} = \frac{N}{{T}_{S}} {\int }_{t 4}^{t 6} {i}_{Lr} \left(t\right) dt$

Based on the derivations above, we can get all the information we need to build up a look-up table to achieve smooth transition from the first control mode to the second control mode applying the DT-DT control. Specifically, to achieve smooth transition, we need to make the initial states of transition stage (i.e., the period P2) match the end states of first control mode (i.e., the period P1), and make the end states of transition stage match the initial states of the second control mode (i.e., the period P3). Assume the input and output voltage won't change before and after the transition stage, we also need to match the average output current of the first and second control modes. Alternatively, we can also match the gain of the first and second control modes.

The first step is to solve equations for the steady state of the first control mode during the period P1, which are shown in equation (27). In the embodiment, any three of the four variables of Vᵢₙ, Vₒ, T_{S} and Iₒ are needed to solve equation (27). Normally, we know the switching period Ts and output voltage Vₒ. One extra sensing is required for either input voltage Vᵢₙ or output current Iₒ. $\left\{\begin{matrix}{i}_{Lr 1} = {I}_{m 1} \\ {v}_{Cr 0} + {v}_{Cr 2} = 0 \\ {i}_{Lr 0} + {i}_{Lr 2} = 0\end{matrix}\right.$

From equation (27), the initial states of the transition stage during the period P2, namely v_{Cr1} and i_{Lr1}, are obtained.

The second step is to solve equations for the steady state of the second control mode during the period P3. Knowing any four of the five variables of Vₘ, Vₒ, T_{S}, delay time, and Iₒ plus the constraints shown in (28) can solve the equations for the steady state of the second control mode. Normally, we know the switching period Ts, output voltage Vₒ, and output current Iₒ. One extra information of either input voltage Vᵢₙ or delay time is required. For this transition control, we can assume the input voltage Vᵢₙ remains the same, so we can use the output voltage Vₒ from the first control mode during the period P1. In this way, the initial states of the second control mode during period P3, namely v_{Cr4}, i_{Lr4} and the delay time (i.e., the time length between time t5 and t6) can be derived. $\left\{\begin{matrix}{v}_{Cr 4} + {v}_{Cr 6} = 0 \\ {i}_{Lr 4} + {i}_{Lr 6} = 0\end{matrix}\right.$

With initial states (v_{Cr2}, i_{Lr2}) and the end states (v_{Cr4}, i_{Lr4}), we can get time t3 and time t4 to design the modulation for the transition stage during the period P2. For different load conditions or different input and output voltages, we can get a lookup table to achieve smooth transition from the first control mode to the second control mode applying the DT-DT control.

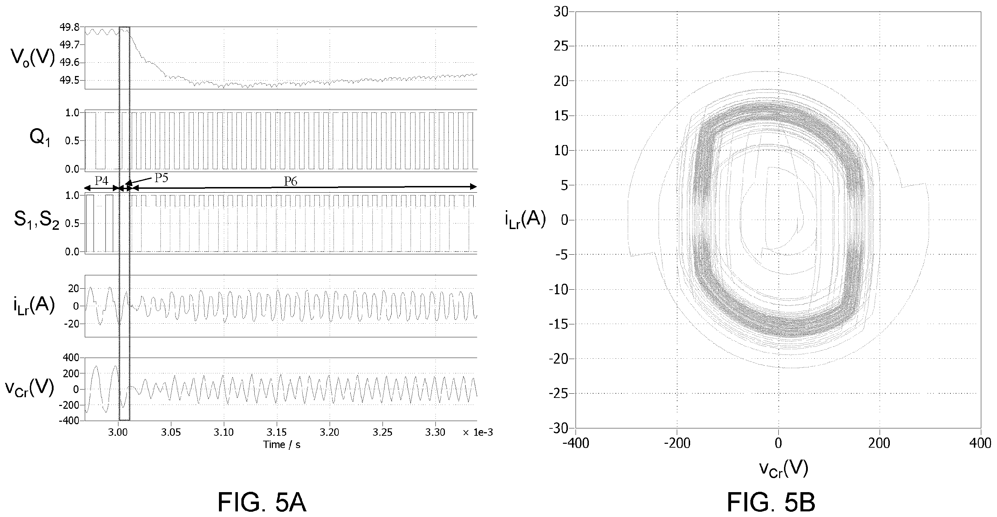

FIG. 5A and FIG. 5B schematically show an embodiment's operation waveforms and trajectory of a delay transition from the first control mode to the second control mode applying the DT-DT control. In FIG. 5A, S₂ represents the secondary driving signal of secondary switch S₂, and the secondary driving signals of secondary switches S₁ and S₂ are shown in the same oscillogram in which the amplitude of the secondary driving signal of secondary switch S₁ is greater than that of secondary switch S₂. As shown in FIG. 5A and FIG. 5B, during period P4, the control module 10 operates in the first control mode. When the transition from first control mode to the second control mode is requested, the switching frequency of the primary switches Q₁, Q₂, Q₃ and Q₄ is changed directly for the next cycle, for example but not limited to become 1.5 to 1.8 times of the resonant frequency. While for the secondary switches S₁, S₂, S₃ and S₄, all the secondary driving signals are disabled by one cycle (i.e., period P5) to release the energy in the resonant tank. When the resonant inductor current i_{Lr} drop to zero, the diodes or body diodes at secondary side can prevent the current from further dropping or increasing. From the next cycle (i.e., period P6), the secondary switches S₁, S₂, S₃ and S₄ are activated and the DT-DT control of the second control mode is activated. In the embodiment, it can be observed that the energy in the resonant tank is rebuild within the next few cycles without over current on the resonant inductor Lᵣ or over voltage on the resonant capacitor Cᵣ. In addition, in another embodiment, the period P5 may include multiple cycles, namely the secondary switches S₁, S₂, S₃ and S₄ may be disabled by multiple cycles.

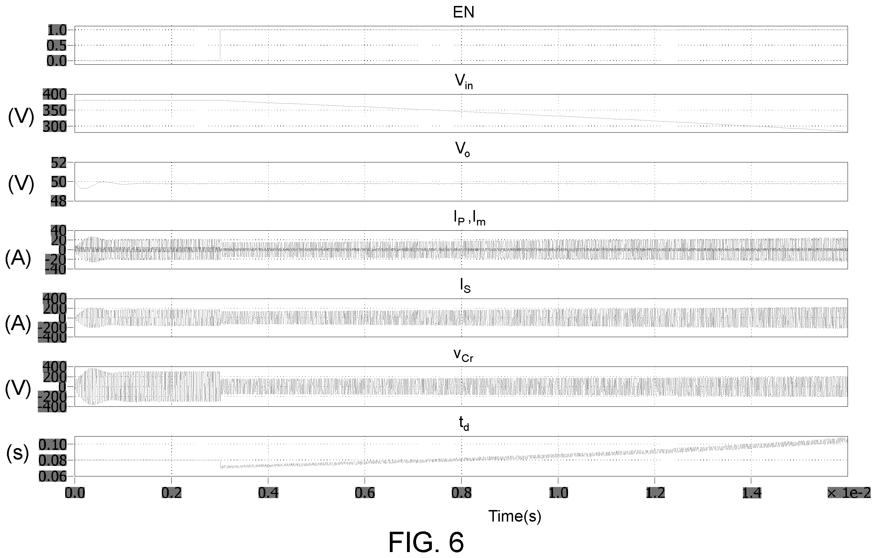

FIG. 6 schematically shows the whole hold-up time process with the transition from the first control mode to the second control mode applying the DT-DT control of an embodiment. In FIG. 6, EN is a signal representing that the hold-up time is enabled or not, I_{P} is a primary current, I_{S} is a secondary current, and t_{d} is a delay time of the secondary driving signals relative to the primary driving signals. The primary current I_{P} and the magnetizing current Iₘ are shown in the same oscillogram in which the amplitude of primary current I_{P} is greater than that of magnetizing current Iₘ. As shown in FIG. 6, in the embodiment, the output voltage Vₒ is stable, and there is no over current and over voltage on the resonant tank.

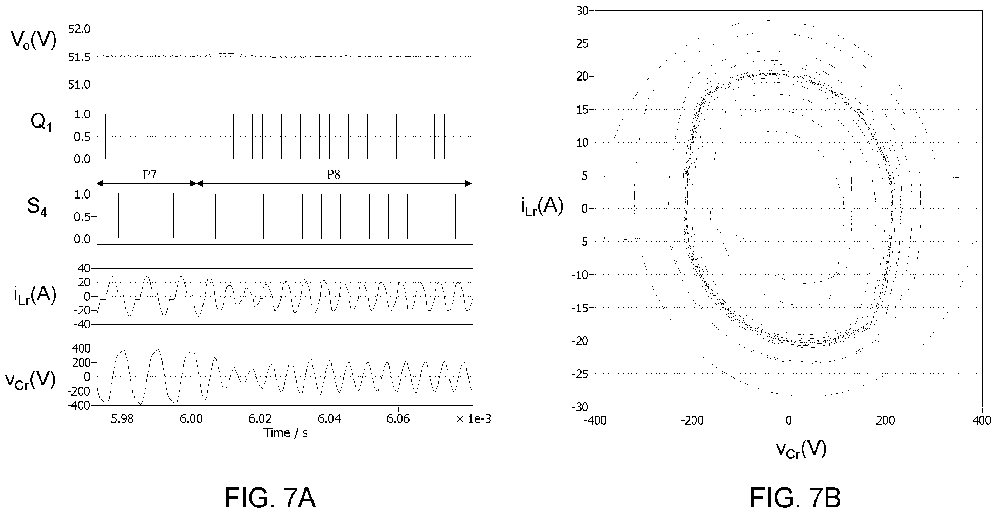

FIG. 7A and FIG. 7B schematically show one embodiment's operation waveforms and trajectory of a direct transition from the first control mode to the second control mode applying the SR-DT control. In FIG. 7A, S₄ represents the secondary driving signal of secondary switch S₄. Further, during period P7, the control module 10 operates in the first control mode; and during period P8, the control module 10 operates in the second control mode applying the SR-DT control. In this embodiment, the control module 10 directly transits from the first control mode to the second control mode applying the SR-DT control. The secondary switches S₁ and S₂ are controlled as synchronous rectification switches in the whole process. The secondary switches S₃ and S₄ works as synchronous rectification switches before transition and direct transit to delay time control when the transition happens. It is noted that the switches in the same bridge arm are complimentary with reasonable deadtime. The primary switches Q₁ and Q₄ share the same primary driving signal. In the present embodiment, from the waveforms and the trajectory shown in FIG. 7A and FIG. 7B, it can be observed that there is no over current or over voltage on the resonant tank. Additionally, in the embodiment, the transition is smooth because the secondary switches S₁ and S₂ continuously work as synchronous rectification switches.

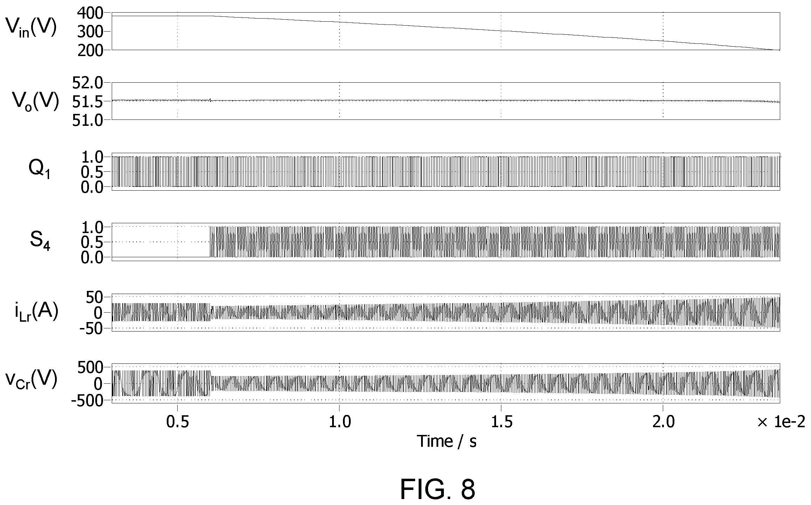

FIG. 8 schematically shows the whole hold-up time process with the transition from the first control mode to the second control mode applying the SR-DT control of one embodiment. In the embodiment as shown in FIG. 8, the output voltage Vₒ is stable and does not have much overshoot or undershoot.

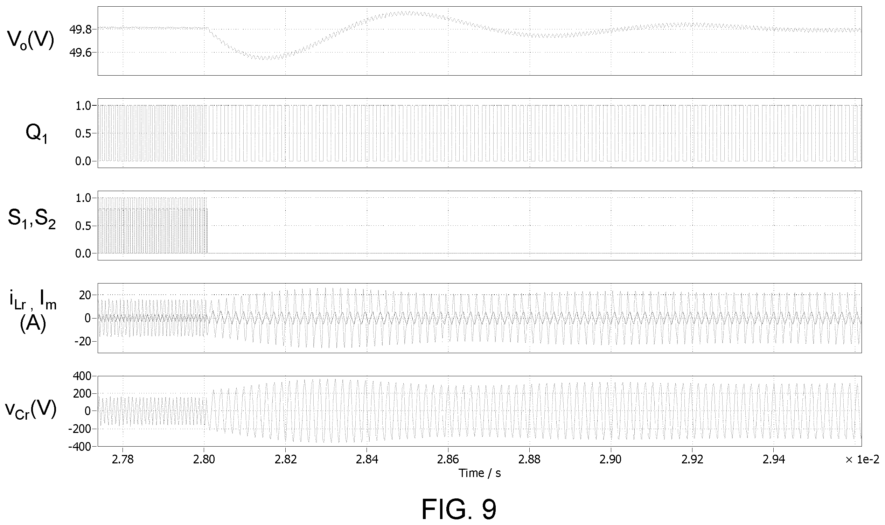

FIG. 9 schematically show operation waveforms of a direct transition from the second control mode applying the DT-DT control to the first control mode of one embodiment. In the present embodiment, if the secondary driving signals of secondary switches S₁ and S₂ are shown in the same oscillogram, the waveform of the secondary driving signal of secondary switch S₂ has smaller amplitude compared to the secondary switch S₁. Further, in the present embodiment, if the resonant inductor current i_{Lr} and the magnetizing current Iₘ are shown in the same oscillogram, the waveform of magnetizing current Iₘ has smaller amplitude compared to the resonant inductor current i_{Lr}. During the transition, the switching frequency directly changes from above resonant frequency to the frequency in the first control mode with the same gain. Depends on the load condition, the frequency in the first control mode may be below or above the resonant frequency. As shown in FIG. 9, the output voltage Vₒ, the resonant inductor current i_{Lr}, and the resonant capacitor voltage v_{Cr} have some oscillations. In addition, in this embodiment, the secondary switches are kept off in the first control mode. While in another embodiment, the secondary switches may operate as synchronous rectification switches in the first control mode.

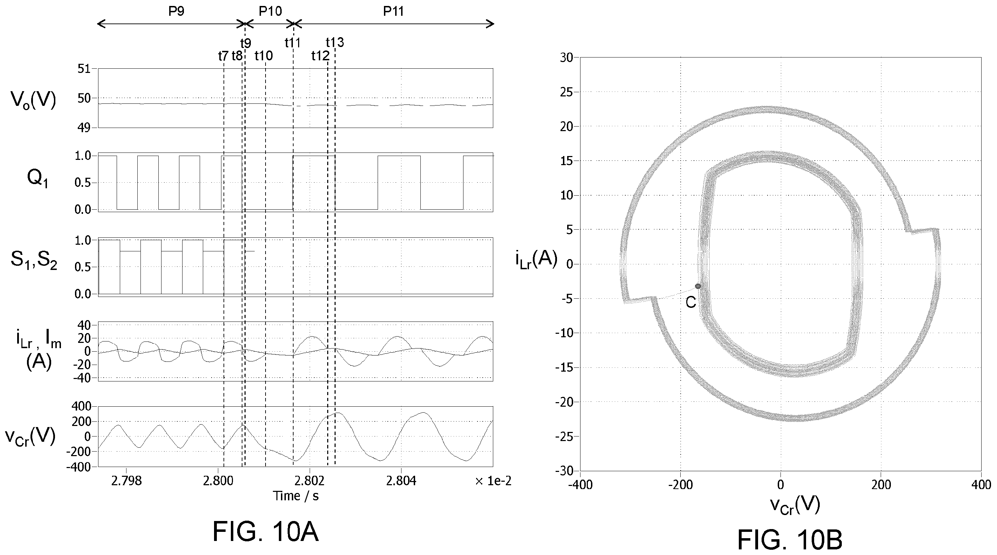

FIG. 10A and FIG. 10B schematically show one embodiment's operation waveforms and trajectory of a transition from the second control mode applying the DT-DT control to the first control mode with a phase shift. As shown in FIG. 10A and FIG. 10B, during period P9 (i.e., before time t9), the control module 10 operates in the second control mode; during period P10 (i.e., between time t9 and t11), the control module 10 transits from the second control mode to the first control mode, and during period P11 (i.e., after time t11), the control module 10 operates in the first control mode. As the transition from the second control mode to the first control mode is requested, a phase shift, represented by period P10, is introduced to help match the resonant tank energy with the required energy in the first control mode. At the time t10 shown in FIG. 10A, corresponding to the point C shown in FIG. 10B, the control module 10 starts transiting to the first control mode. It is noted that the length of the introduced phase shift (period P10) and the switching cycle may be determined according to look-up table based on the load condition, input voltage Vᵢₙ and output voltage Vₒ. In this way, the transition from the second control mode applying DT-DT control to the first control mode is smooth. In addition, in this embodiment, the secondary switches are kept off in the first control mode. While in another embodiment, the secondary switches may operate as synchronous rectification switches in the first control mode.

According to the above descriptions regarding the embodiment shown in FIGS. 4A to 4H, similar approach can be used to get all the information for the second control mode during period P9 and the first control mode during period P11, and thus detailed descriptions thereof are omitted herein. It is noted that in this embodiment, the equations for the transition stage during period P10 are different.

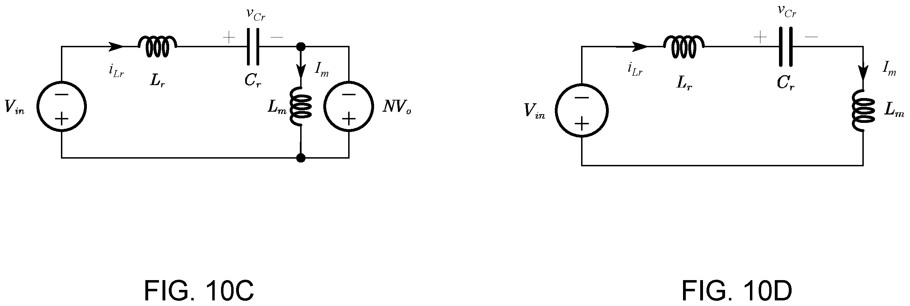

The equivalent circuit of the resonant converter 1 of one embodiment during the period from time t9 to t10 is shown in FIG. 10C. During this period, the resonant capacitor voltage v_{Cr}, the resonant inductor current i_{Lr}, and the magnetizing current Iₘ are described as:$\begin{matrix}{ν}_{Cr} \left(t\right) = \left(-{V}_{in}+N⋅{V}_{0}\right) + \left({ν}_{Cr 9}+\left({V}_{in}-N⋅{V}_{0}\right)\right) ⋅ cos \left({ω}_{r}\left(t-t9\right)\right) + \\ {i}_{Lr 9} ⋅ Z ⋅ sin \left({ω}_{r}\left(t-t9\right)\right)\end{matrix}$${i}_{Lr} \left(t\right) = {i}_{Lr 9} cos \left({ω}_{r}\left(t-t9\right)\right) - \frac{{v}_{Cr 9} + \left({V}_{in}-N⋅{V}_{o}\right)}{Z} sin \left({ω}_{r}\left(t-t9\right)\right)$ ${I}_{m} \left(t\right) = {I}_{m 9} - \frac{N ⋅ {V}_{o}}{{L}_{m}} t$

In equations (29)-(31), v_{Cr9}, i_{Lr9}, and Iₘ₉ are respectively the resonant capacitor voltage v_{Cr}, the resonant inductor current i_{Lr}, and the magnetizing current Iₘ at time t9.

The resonant capacitor voltage v_{Cr}, the resonant inductor current i_{Lr}, and the magnetizing current Iₘ at time t10 are defined as v_{Cr10}, i_{Lr10}, and Iₘ₁₀ respectively. ${v}_{Cr 10} = {v}_{Cr} \left(t10\right) , {i}_{Lr 10} = {i}_{Lr} \left(t10\right) , {I}_{m 10} = {I}_{m} \left(t10\right)$

The equivalent circuit of the resonant converter 1 of one embodiment during the period from time t10 to t11 is shown in FIG. 10D. During this period, the resonant capacitor voltage v_{Cr}, the resonant inductor current i_{Lr}, and the magnetizing current Iₘ are described as:$\begin{matrix}{ν}_{Cr} \left(t\right) = - {V}_{in} + \left({ν}_{Cr 10}+{V}_{in}\right) ⋅ cos \left({ω}_{r}\left(t-t10\right)\right) + \\ {i}_{Lr 10} ⋅ Z ⋅ sin \left({ω}_{r}\left(t-t10\right)\right)\end{matrix}$${I}_{m} \left(t\right) = {i}_{Lr} \left(t\right) = {i}_{Lr 10} cos \left({ω}_{r}\left(t-t10\right)\right) - \frac{{v}_{Cr 10} + {V}_{in}}{Z} sin \left({ω}_{r}\left(t-t10\right)\right)$

The resonant capacitor voltage v_{Cr}, the resonant inductor current i_{Lr}, and the magnetizing current Iₘ at time t11 are defined as v_{Cr11}, i_{Lr11}, and Iₘ₁₁ respectively. ${v}_{Cr 11} = {v}_{Cr} \left(t11\right) , {i}_{Lr 11} = {i}_{Lr} \left(t11\right) , {I}_{m 11} = {I}_{m} \left(t11\right)$

Since v_{Cr9} and i_{Lr9} are obtained from the second control mode during period P9 and v_{Cr11} and i_{Lr11} are obtained from the first control mode during period P11, the time t10 and t11 of the transition stage during period P10 can be obtained from the equations (33)-(34). For different load conditions or different input and output voltages, we can get a lookup table to achieve smooth transition from the second control mode applying the DT-DT control to the first control mode.

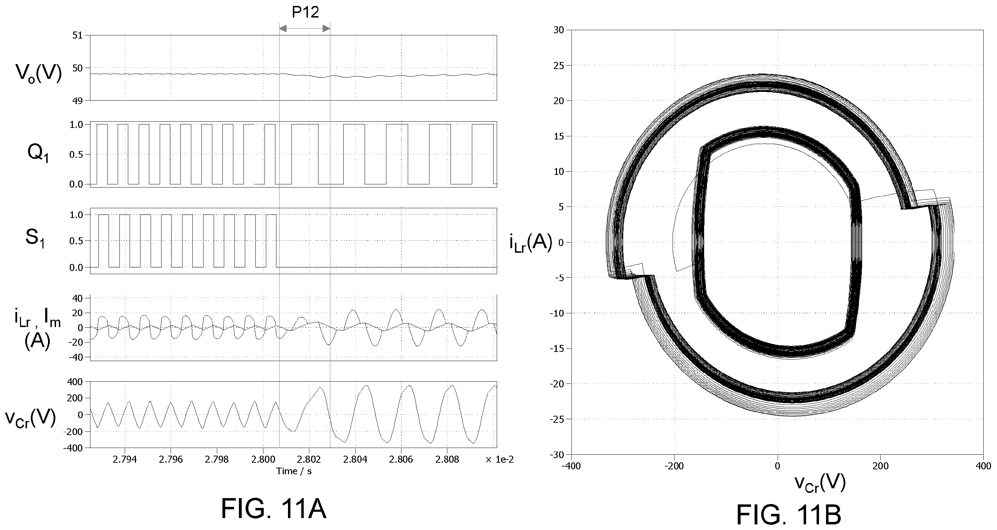

FIG. 11A and FIG. 11B schematically show one embodiment's operation waveforms and trajectory of a transition from the second control mode applying the DT-DT control to the first control mode with first period feedforward. As shown in FIG. 11A and FIG. 11B, when transiting from the second control mode to the first control mode, by the end of the first switching period (represented by period P12), the resonant tank energy match with a preset energy. The length of the first switching period (period P12) may be estimated based on equation or look-up table related to load condition for given input voltage Vᵢₙ and output voltage Vₒ. In addition, in this embodiment, the secondary switches are kept off in the first control mode. While in another embodiment, the secondary switches may operate as synchronous rectification switches in the first control mode.

For the first control mode in this embodiment, during the series resonant of the magnetizing inductor Lₘ, resonant inductor Lᵣ and resonant capacitor Cᵣ, most of the energy is stored in the resonant capacitor Cᵣ because the magnetizing current Iₘ is normally low. Therefore, by making sure the total energy in resonant capacitor Cᵣ and resonant inductor Lᵣ at the end of transition stage (i.e., period P12) equals the total energy in resonant capacitor Cᵣ and resonant inductor Lᵣ during steady state of first control mode, we can also achieve smooth transition from the second control mode applying the DT-DT control to the first control mode.

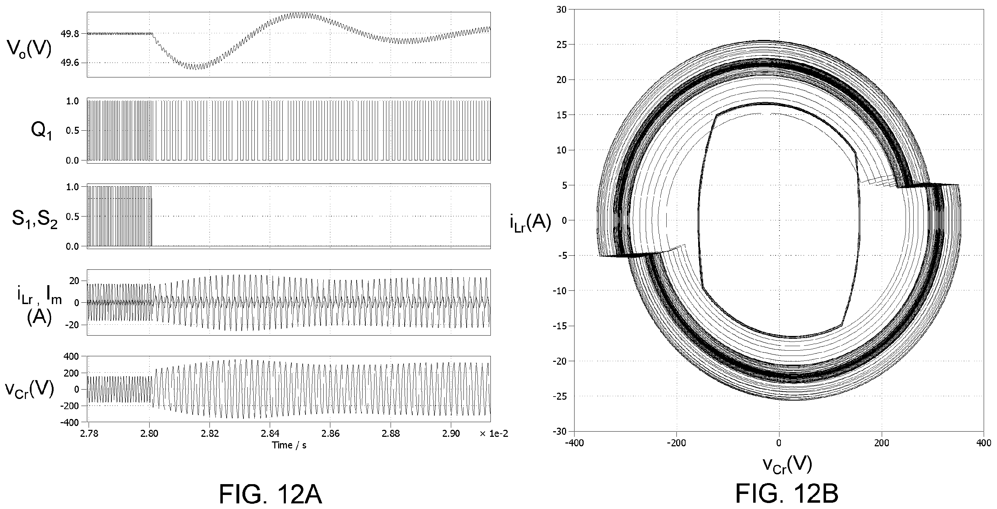

FIG. 12A and FIG. 12B schematically show one embodiment's operation waveforms and trajectory of a direct transition from the second control mode applying the SR-DT control to the first control mode. As shown in FIG. 12A and FIG. 12B, during the transition, the switching frequency directly changes from above resonant frequency to the frequency in the first control mode with the same gain. Depends on the load condition, the frequency in the first control mode may be below or above the resonant frequency. The output voltage Vₒ, the resonant inductor current i_{Lr}, and the resonant capacitor voltage v_{Cr} have some oscillations. In addition, in this embodiment, the secondary switches are kept off in the first control mode. While in another embodiment, the secondary switches may operate as synchronous rectification switches in the first control mode.

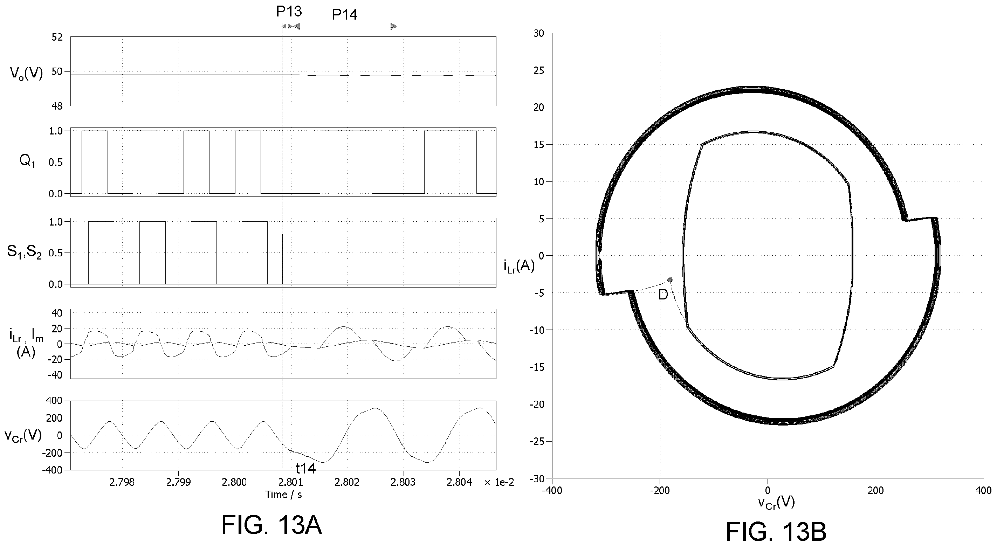

FIG. 13A and FIG. 13B schematically show one embodiment's operation waveforms and trajectory of a transition from the second control mode applying the SR-DT control to the first control mode with a phase shift. As shown in FIG. 13A and FIG. 13B, as the transition from the second control mode to the first control mode is requested, a phase shift, represented by period P13, is introduced to help match the resonant tank energy with the required energy in the first control mode. During this period P13, the primary switches Q₁ and the secondary switches S₁ and S₂ keep off. At the time t14 shown in FIG. 13A, corresponding to the point D shown in FIG. 13B, the control module 10 starts transiting to the first control mode. Moreover, the period P14 shown in FIG. 13A represents the switching cycle. It is noted that the length of the introduced phase shift (period P13) and the switching cycle (period P14) may be determined according to look-up table based on the load condition, input voltage Vᵢₙ, and output voltage Vₒ. In this way, the transition from the second control mode applying SR-DT control to the first control mode is smooth. In addition, in this embodiment, the secondary switches are kept off in the first control mode. While in another embodiment, the secondary switches may operate as synchronous rectification switches in the first control mode.

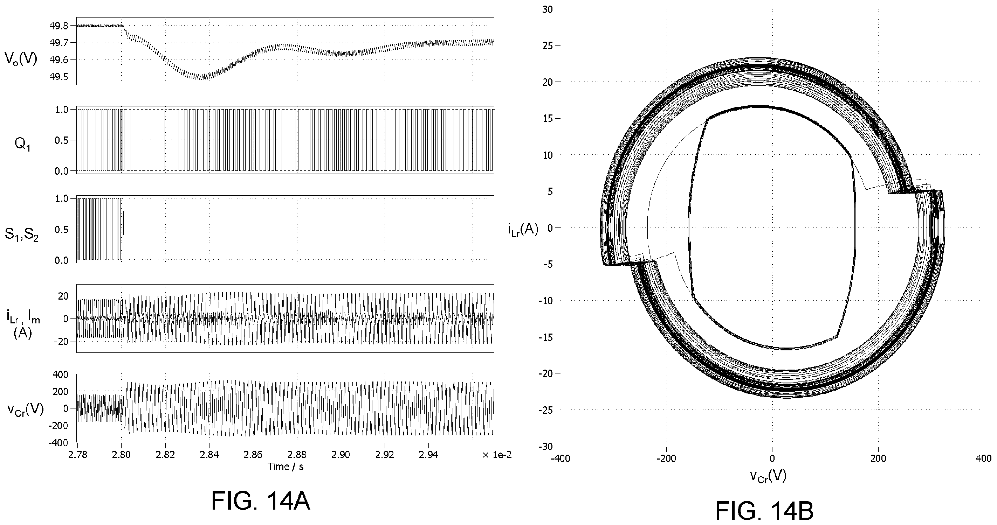

FIG. 14A and FIG. 14B schematically show one embodiment's operation waveforms and trajectory of a transition from the second control mode applying the SR-DT control to the first control mode with first period feedforward. The transition in this embodiment is similar with that shown in FIG. 11A and FIG. 11B, and thus detailed descriptions thereof are omitted herein.

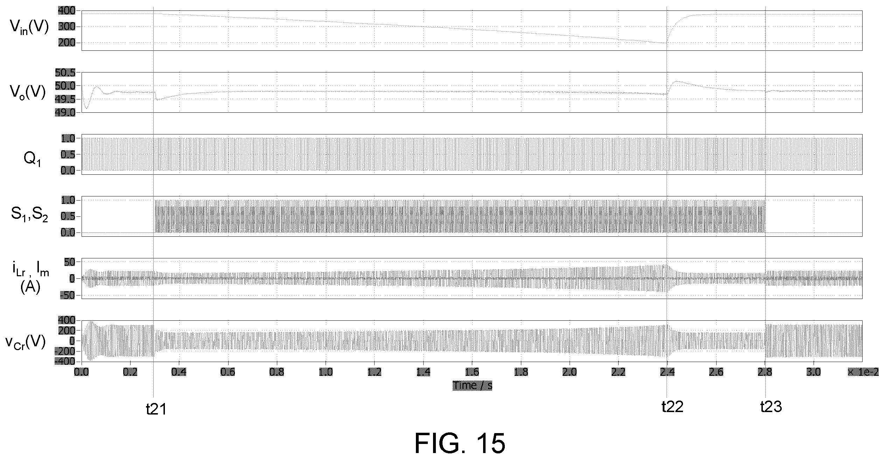

FIG. 15 schematically shows the whole hold-up time process with the transition between the first control mode and the second control mode applying the DT-DT control of one embodiment. As shown in FIG. 15, before time t21, the input voltage Vᵢₙ is normal (i.e., higher than the threshold voltage), and the first control mode is performed. At time t21, the input voltage Vᵢₙ drops below the threshold voltage, and thus the control module 10 transmits from the first control mode to the second control mode applying the DT-DT control to main the output voltage Vₒ within the predetermined range. During the period from time t22 to time t23, the input voltage Vᵢₙ rises, and the control module 10 maintains in the DT-DT control until the input voltage Vᵢₙ rises above the predefined threshold. At time t23, the control module 10 starts to transmit from the DT-DT control to the first control mode. After time t23, the first control mode is performed. In addition, in this embodiment, the secondary switches are kept off in the first control mode. While in another embodiment, the secondary switches may operate as synchronous rectification switches in the first control mode.

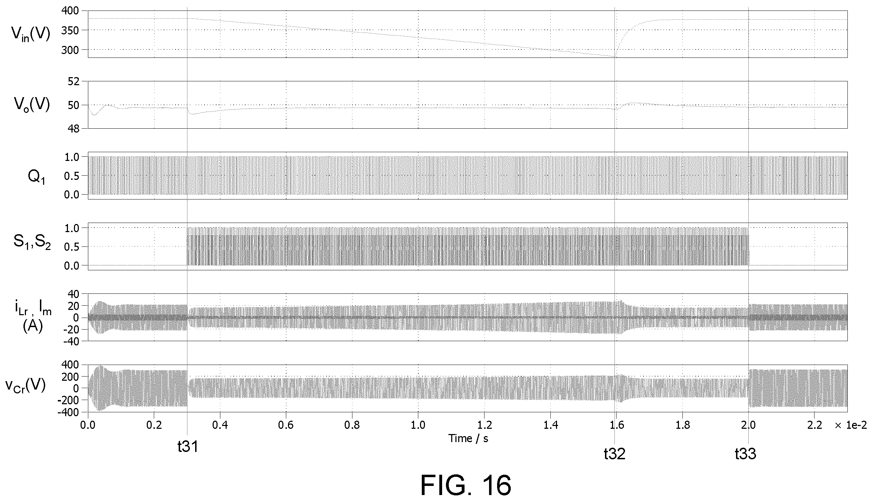

FIG. 16 schematically shows the whole hold-up time process with the transition between the first control mode and the second control mode applying the SR-DT control of one embodiment. As shown in FIG. 16, before time t31, the input voltage Vᵢₙ is normal (i.e., higher than the threshold voltage), and the first control mode is performed. At time t31, the input voltage Vᵢₙ drops below the threshold voltage, and thus the control module 10 transmits from the first control mode to the second control mode applying the SR-DT control to main the output voltage Vₒ within the predetermined range. During the period from time t32 to time t33, the input voltage Vᵢₙ rises, and the control module 10 maintains in the SR-DT control until the input voltage Vᵢₙ rises above the predefined threshold. At time t33, the control module 10 starts to transmit from the SR-DT control to the first control mode. After time t33, the first control mode is performed. In addition, in this embodiment, the secondary switches are kept off in the first control mode. While in another embodiment, the secondary switches may operate as synchronous rectification switches in the first control mode.

In the above embodiments, the input voltage Vᵢₙ is exemplified as a DC voltage. However, the present disclosure is not limited thereto, and the input voltage Vᵢₙ may be an AC voltage in another embodiment. For example, in the case that the input voltage Vₘ is an AC voltage, if the input voltage Vᵢₙ loses, the transition from the first control mode to the second control mode is performed. Then, if the input voltage Vᵢₙ recovers, the transition from the second control mode to the first control mode is performed.

## Claims

1. A control method of a resonant converter (1) comprising a primary circuit (2), a transformer (TR), and a secondary circuit (3), wherein the transformer (TR) is coupled between the primary circuit (2) and the secondary circuit (3), and the control method is **characterized by** comprising:
in a first control mode, controlling primary switches (Q₁, Q₂, Q₃, Q₄) of the primary circuit (2) and secondary switches (S₁, S₂, S₃, S₄) of the secondary circuit (3) with a variable switching frequency;
in a second control mode, controlling a phase shift between the primary switches (Q₁, Q₂, Q₃, Q₄) and the secondary switches (S₁, S₂, S₃, S₄);
when an input voltage (Vᵢₙ) of the resonant converter (1) is within a preset range, controlling the resonant converter (1) with the first control mode;
when the input voltage (Vᵢₙ) changes from within the preset range to outside the preset range, transiting from the first control mode to the second control mode to maintain an output voltage (Vₒ) of the resonant converter (1) within a predetermined range; and
when the input voltage (Vᵢₙ) changes from outside the preset range to within the preset range, transiting from the second control mode to the first control mode.

2. The control method according to claim 1, wherein in the second control mode, the control method comprises operating the primary switches (Q₁, Q₂, Q₃, Q₄) to control a lead time of the primary switches (Q₁, Q₂, Q₃, Q₄) leading the secondary switches (S₁, S₂, S₃, S₄).

3. The control method according to claim 2, wherein the secondary circuit (3) comprises a first switch bridge arm and a second switch bridge arm electrically connected in parallel, and the second control mode comprises a first control and a second control, wherein in the first control of the second control mode, phases of the secondary switches (S₁, S₂, S₃, S₄) are fixed, and the primary switches (Q₁, Q₂, Q₃, Q₄) lead the secondary switches (S₁, S₂, S₃, S₄) by the lead time; wherein in the second control of the second control mode, secondary switches (S₁, S₂) of the first switch bridge arm are controlled to operate as synchronous rectification switches or maintain at an off state, phases of secondary switches (S₃, S₄) of the second switch bridge arm are fixed, and the primary switches (Q₁, Q₂, Q₃, Q₄) lead the secondary switches (S₃, S₄) of the second switch bridge arm by the lead time.

4. The control method according to claim 3, comprising:
when the input voltage (Vᵢₙ) changes from within the preset range to outside the preset range, transiting from the first control mode to the first control or the second control of the second control mode directly.

5. The control method according to any one of the above claims, wherein the primary circuit (2) further comprises a resonant inductor (Lᵣ) and a resonant capacitor (Cᵣ), and the control method comprises:
when the input voltage (Vᵢₙ) changes from within the preset range to outside the preset range, transiting from the first control mode to the first control of the second control mode; and
during transiting from the first control mode to the first control of the second control mode, turning off one of the primary switches (Q₁, Q₂, Q₃, Q₄) when a voltage of the resonant capacitor (Cᵣ) reaches a target voltage, and turning off a corresponding one of the secondary switches (S₁, S₂, S₃, S₄) when a current flowing through the resonant inductor (Lᵣ) reaches a target current, wherein a time duration between turning off the one of the primary switches and turning off the corresponding one of the secondary switches is an initial value of the lead time.

6. The control method according to any one of the above claims, comprising:
when the input voltage (Vᵢₙ) changes from within the preset range to outside the preset range, transiting from the first control mode to the first control of the second control mode; and
during transiting from the first control mode to the first control of the second control mode, disabling the secondary switches (S₁, S₂, S₃, S₄) for at least one cycle to release energy in a resonant tank of the primary circuit (2).

7. The control method according to any one of the above claims, comprising:
when the input voltage (Vᵢₙ) is outside the preset range, controlling the resonant converter (1) with the first control or the second control of the second control mode; and
when the input voltage (Vᵢₙ) changes from outside the preset range to within the preset range, transiting from the first control or the second control of the second control mode to the first control mode directly.

8. The control method according to any one of the above claims, comprising:
when the input voltage (Vᵢₙ) is outside the preset range, controlling the resonant converter (1) with the first control or the second control of the second control mode;
when the input voltage (Vᵢₙ) changes from outside the preset range to within the preset range, transiting from the first control or the second control of the second control mode to the first control mode; and
during transiting from the first control or the second control of the second control mode to the first control mode, disabling the primary switches (Q₁, Q₂, Q₃, Q₄) and the secondary switches (S₁, S₂, S₃, S₄) for a period, and then performing the first control mode, wherein the period and a switching cycle of the primary switches (Q₁, Q₂, Q₃, Q₄) in the first control mode are determined according to load condition, the input voltage (Vᵢₙ) and the output voltage (Vₒ) of the resonant converter (1).

9. The control method according to any one of the above claims, comprising:
when the input voltage (Vᵢₙ) is outside the preset range, controlling the resonant converter (1) with the first control or the second control of the second control mode; and
when the input voltage (Vᵢₙ) changes from outside the preset range to within the preset range, transiting from the first control or the second control of the second control mode to the first control mode, and according to load condition, the input voltage (Vᵢₙ) and the output voltage (Vₒ) of the resonant converter (1), controlling a first switching period under the first control mode to make energy of a resonant tank of the primary circuit (2) match with preset energy.

10. The control method according to any one of the above claims, comprising:
detecting a zero-crossing point of a current flowing through a primary winding of the transformer (TR); and
when the input voltage (Vᵢₙ) is outside the preset range, controlling the resonant converter (1) with the second control of the second control mode based on the zero-crossing point.

11. The control method according to any one of the above claims, wherein in the second control mode, the control method comprises operating the secondary switches (S₁, S₂, S₃, S₄) to control a delay time of the secondary switches (S₁, S₂, S₃, S₄) lagging the primary switches (Q₁, Q₂, Q₃, Q₄).

12. The control method according to any one of the above claims, wherein the primary circuit (2) comprises a resonant tank, a switching frequency of the primary switches (Q₁, Q₂, Q₃, Q₄) and the secondary switches (S₁, S₂, S₃, S₄) under the first control mode is above a resonant frequency of the resonant tank, and a switching frequency of the primary switches (Q₁, Q₂, Q₃, Q₄) and the secondary switches (S₁, S₂, S₃, S₄) under the second control mode is between 1.5 to 1.8 times of a resonant frequency of the resonant tank.

13. A resonant converter (1), **characterized by** comprising:
a primary circuit (2), comprising primary switches (Q₁, Q₂, Q₃, Q₄);
a secondary circuit (3), comprising secondary switches (S₁, S₂, S₃, S₄);
a transformer (TR), coupled between the primary circuit (2) and the secondary circuit (3); and
a control module (10), configured to:
in a first control mode, control primary switches (Q₁, Q₂, Q₃, Q₄) of the primary circuit (2) and secondary switches (S₁, S₂, S₃, S₄) of the secondary circuit (3) with a variable switching frequency;
in a second control mode, control a phase shift between the primary switches (Q₁, Q₂, Q₃, Q₄) and the secondary switches (S₁, S₂, S₃, S₄);
when an input voltage (Vᵢₙ) of the resonant converter (1) is within a preset range, control the resonant converter (1) with the first control mode;
when the input voltage (Vᵢₙ) changes from within the preset range to outside the preset range, transit from the first control mode to the second control mode to maintain an output voltage (Vₒ) of the resonant converter (1) within a predetermined range; and
when the input voltage (Vᵢₙ) changes from outside the preset range to within the preset range, transit from the second control mode to the first control mode.

14. The resonant converter (1) according to claim 13, wherein in the second control mode, the control module (10) is configured to operate the primary switches (Q₁, Q₂, Q₃, Q₄) to control a lead time of the primary switches (Q₁, Q₂, Q₃, Q₄) leading the secondary switches (S₁, S₂, S₃, S₄).

15. The resonant converter (1) according to claim 14, wherein the secondary circuit (3) comprises a first switch bridge arm and a second switch bridge arm electrically connected in parallel, and the second control mode comprises a first control and a second control, wherein in the first control of the second control mode, the control module (10) controls phases of the secondary switches (S₁, S₂, S₃, S₄) to be fixed and controls the lead time of the primary switches (Q₁, Q₂, Q₃, Q₄) leading the secondary switches (S₁, S₂, S₃, S₄); wherein in the second control of the second control mode, the control module (10) controls secondary switches (S₁, S₂) of the first switch bridge arm to operate as synchronous rectification switches or maintain at an off state, and the control module (10) controls phases of secondary switches (S₃, S₄) of the second switch bridge arm to be fixed and controls the lead time of the primary switches (Q₁, Q₂, Q₃, Q₄) leading the secondary switches (S₁, S₂, S₃, S₄) of the second switch bridge arm.

16. The resonant converter (1) according to any one of claims 13 to 15, wherein when the input voltage (Vᵢₙ) changes from within the preset range to outside the preset range, the control module (10) is configured to transit from the first control or the second control mode to the first control of the second control mode directly.

17. The resonant converter (1) according to any one of claims 13 to 16, wherein the primary circuit (2) further comprises a resonant inductor (Lᵣ) and a resonant capacitor (Cᵣ), and the control method is configured to:
when the input voltage (Vᵢₙ) changes from within the preset range to outside the preset range, transit from the first control mode to the first control of the second control mode; and
during transiting from the first control mode of the first control of the second control mode, turn off one of the primary switches (Q₁, Q₂, Q₃, Q₄) when a voltage of the resonant capacitor (Cᵣ) reaches a target voltage, and turn off a corresponding one of the secondary switches (S₁, S₂, S₃, S₄) when a current flowing through the resonant inductor reaches a target current, wherein a time duration between turning off the one of the primary switches and turning off the corresponding one of the secondary switches is an initial value of the lead time.

18. The resonant converter (1) according to any one of claims 13 to 17, wherein the control module (10) is configured to:
when the input voltage (Vᵢₙ) changes from within the preset range to outside the preset range, transit from the first control mode to the first control of the second control mode; and
during transiting from the first control mode of the first control of the second control mode, disable the secondary switches (S₁, S₂, S₃, S₄) for at least one cycle to release energy in a resonant tank of the primary circuit (2).

19. The resonant converter (1) according to any one of claims 13 to 18, wherein the control module (10) is configured to:
when the input voltage (Vᵢₙ) is outside the preset range, control the resonant converter (1) with the first control or the second control of the second control mode; and
when the input voltage (Vᵢₙ) changes from outside the preset range to within the preset range, transit from the first control or the second control of the second control mode to the first control mode directly.

20. The resonant converter (1) according to any one of claims 13 to 19, wherein the control module (10) is configured to:
when the input voltage (Vᵢₙ) is outside the preset range, control the resonant converter (1) with the first control or the second control of the second control mode;
when the input voltage (Vᵢₙ) changes from outside the preset range to within the preset range, transit from the first control or the second control of the second control mode to the first control mode; and
during transiting from the first control or the second control of the second control mode to the first control mode, disable the primary switches (Q₁, Q₂, Q₃, Q₄) and the secondary switches (S₁, S₂, S₃, S₄) for a period, and perform the first control mode, wherein the period and a switching cycle of the primary switches (Q₁, Q₂, Q₃, Q₄) in the first control mode are determined according to load condition, the input voltage (Vᵢₙ) and the output voltage (Vₒ) of the resonant converter (1).

21. The resonant converter (1) according to any one of claims 13 to 20, wherein the control module (10) is configured to:
when the input voltage (Vᵢₙ) is outside the preset range, control the resonant converter (1) with the first control or the second control of the second control mode; and
when the input voltage (Vᵢₙ) changes from outside the preset range to within the preset range, transit from the first control or the second control of the second control mode to the first control mode, and according to load condition, the input voltage (Vᵢₙ) and the output voltage (Vₒ) of the resonant converter (1), control a first switching period under the first control mode to make energy of a resonant tank of the primary circuit (2) match with preset energy.

22. The resonant converter (1) according to any one of claims 13 to 21, wherein the control module (10) is configured to:
detect a zero-crossing point of a current flowing through a primary winding of the transformer (TR); and
when the input voltage (Vᵢₙ) is outside the preset range, control the resonant converter (1) with the second control of the second control mode based on the zero-crossing point.

23. The resonant converter (1) according to any one of claims 13 to 22, wherein in the second control mode, the control module (10) is configured to operate the secondary switches (S₁, S₂, S₃, S₄) to control a delay time of the secondary switches (S₁, S₂, S₃, S₄) lagging the primary switches (Q₁, Q₂, Q₃, Q₄).

24. The resonant converter (1) according to any one of claims 13 to 23, wherein the primary circuit (2) comprises a resonant tank, a switching frequency of the primary switches (Q₁, Q₂, Q₃, Q₄) and the secondary switches (S₁, S₂, S₃, S₄) under the first control mode is above a resonant frequency of the resonant tank, and a switching frequency of the primary switches (Q₁, Q₂, Q₃, Q₄) and the secondary switches (S₁, S₂, S₃, S₄) under the second control mode is between 1.5 to 1.8 times of a resonant frequency of the resonant tank; wherein the primary circuit (2) comprises a full-bridge configuration or a half-bridge configuration, and the secondary circuit (3) comprises a full-bridge configuration, a half-bridge configuration, or a center-tapped configuration.

25. The resonant converter (1) according to any one of claims 13 to 24, wherein the control module (10) comprises:
a first controller (11), configured to generate primary control signals according to the input voltage (Vᵢₙ) and the output voltage (Vₒ);
a first driver (12), configured to provide primary driving signals for the primary switches (Q₁, Q₂, Q₃, Q₄) according to the primary control signals generated by the first controller (11);
a second controller (13), configured to generate secondary control signals according to the input voltage (Vᵢₙ) and the output voltage (Vₒ);
a second driver (14), configured to provide secondary driving signals for the secondary switches (S₁, S₂, S₃, S₄) according to the secondary control signals generated by the second controller (13);
a calculator (15), configured to calculate a difference between the output voltage (Vₒ) and an output reference voltage (V_{ref}); and
a compensator (16), configured to generate a compensation signal according to the difference calculated by the calculator (15), wherein the first controller (11) receives the compensation signal from the compensator (16) and generates the primary control signals according to the compensation signal, the input voltage (Vᵢₙ) and the output voltage (Vₒ).
